# EUROPEAN PATENT APPLICATION

(11) **EP 4 746 279 A1**
(43) Date of publication of application: **20.05.2026**
(21) Application number: 23945792.2
(22) Date of filing: 14.07.2023
(51) Int. Cl.: H02M 7/49, H02M 7/48

(54) **ELECTRIC POWER CONVERSION APPARATUS**

(71) Applicant: MITSUBISHI ELECTRIC CORPORATION, Chiyoda-ku Tokyo 100-8310 (JP)
(72) Inventor: OGUSA, Shinichi, Tokyo 100-8310 (JP); KONO, Yoshiyuki, Tokyo 100-8310 (JP)
(74) Representative: Witte, Weller & Partner Patentanwälte mbB
(86) International application number: PCT/JP2023/026091
(87) International publication number: WO 2025/017787

(57) **Abstract**

In a power conversion device (1), each submodule (SM) includes a notification unit (33, 79, 44, 85) that provides a visual notification indicating operation of a bypass switch (BPS). The power conversion device (1) includes: a monitoring camera (70) that collectively captures images of notification units of a plurality of submodules as one piece of image data; and a host controller (3) that performs image processing on the image data, to thereby determine an operation state of the bypass switch (BPS) of each submodule.

## Description

### TECHNICAL FIELD

The present disclosure relates to a power conversion device.

### BACKGROUND ART

In recent years, a modular multilevel converter (MMC) has been put into practical use as a large-capacity power conversion device applied to a high-voltage system such as a power system. The MMC includes multiple unit converters each including a power storage element (typically a capacitor) and a plurality of semiconductor switching elements, and these unit converters are cascaded. The unit converter is hereinafter also referred to as a "converter cell" or a "submodule (SM)."

The MMC is a typical power conversion device for HVDC (High Voltage Direct Current) power transmission. For MMC-HVDC, there are a redundant number of cascaded submodules. If any of the submodules fails, the failed submodule is short-circuited by a bypass switch so as to continue operation by the remaining submodules.

When the semiconductor switching elements constituting the submodule are module-type elements, a bypass switch is required. Even when the semiconductor switching elements are pressure-contact type elements that typically experience a short-circuit failure, a bypass switch is required to ensure reliability of continuous conduction in cases such as MMC-HVDC with high current specifications.

In order to determine whether or not the operation can be continued after issuance of a command to turn on the bypass switch, it is important to confirm the operation of the bypass switch, and a reliable method of confirmation is required. For example, Japanese National Patent Publication No. 2016-518804 (PTL 1) discloses a monitoring device that detects whether or not a bypass switch is conducting.

Specifically, in the monitoring device in this literature, an optical fiber is positioned so as to break when a movable part of a mechanical switch constituting the bypass switch moves to turn on the mechanical switch. When the optical fiber breaks, an optical signal through the optical fiber is interrupted, whereby it is detected that the mechanical switch is in a conducting state.

### CITATION LIST

### PATENT LITERATURE

PTL 1: Japanese National Patent Publication No. 2016-518804

### SUMMARY OF INVENTION

### TECHNICAL PROBLEM

A result of the confirmation of the operation of the bypass switch is transmitted to a host controller by an individual control unit provided in the submodule. However, in order to ensure reliability, it is desirable to be able to transmit the result of the confirmation to the host controller not only via the individual control unit but also directly. In this case, although the transmission to the host control system is possible via optical fiber lines, an increased number of lines presents problems in terms of cost and space. Wireless backup communication is expensive and presents noise problems. These problems are not explicitly described in above-mentioned PTL 1.

The present disclosure has been made in view of the above-described problems, and an object of the present disclosure is to provide a power conversion device that enables direct transmission of a result of confirmation of operation of a bypass switch to a host controller by a relatively simple method.

From the perspective of ensuring reliability of the bypass switch, there are other important problems to be solved. For example, it is important to turn on the bypass switch in a backup manner when the bypass switch cannot be turned on due to a failure of the individual control unit, and to replace the bypass switch in advance as a preventive maintenance measure when a drive system that operates the bypass switch deteriorates. Means for solving these problems will be explicitly described in embodiments below.

### SOLUTION TO PROBLEM

A power conversion device according to one embodiment includes a plurality of cascaded submodules. Each of the plurality of submodules includes: a pair of input/output terminals; a plurality of semiconductor switching elements; a power storage element connected to the pair of input/output terminals through the plurality of semiconductor switching elements; a mechanical bypass switch for short-circuiting the pair of input/output terminals; an individual control unit that controls opening/closing of the plurality of semiconductor switching elements and of the bypass switch; and a notification unit that provides a visual notification indicating operation of the bypass switch. The power conversion device further includes: a monitoring camera that collectively captures images of the respective notification units of the plurality of submodules as one piece of image data; and a host controller that performs image processing on the image data, to thereby determine an operation state of the bypass switch of each of the plurality of submodules.

### ADVANTAGEOUS EFFECTS OF INVENTION

According to the embodiment described above, each submodule includes a notification unit that provides a visual notification indicating operation of a bypass switch, and a power conversion device includes: a monitoring camera that collectively captures images of respective notification units of a plurality of submodules as one piece of image data; and a host controller that performs image processing on the image data, to thereby determine an operation state of the bypass switch of each of the plurality of submodules. With such a configuration, there can be provided a power conversion device that enables direct transmission of a result of confirmation of operation of a bypass switch to a host controller by a relatively simple method.

### BRIEF DESCRIPTION OF DRAWINGS

Fig. 1 is a schematic configuration diagram of a power conversion device according to a first embodiment.
Fig. 2 is a circuit diagram showing an example of a converter cell constituting each leg circuit in Fig. 1.
Fig. 3 is a cross-sectional view showing a conceptual configuration of a bypass switch in Fig. 2.
Fig. 4 is a block diagram showing a hardware configuration example of a host controller.
Fig. 5 is an external view for illustrating a physical arrangement of a plurality of converter cells.
Fig. 6 is a cross-sectional view as seen in a Y direction in Fig. 5.
Fig. 7 is a flowchart showing an operation of turning on a bypass switch and a confirmation procedure.
Fig. 8 is a diagram for illustrating a modification of a notification unit that provides a notification of an operation state of a bypass switch.
Fig. 9 is a circuit diagram showing a configuration example of a submodule in a power conversion device according to a third embodiment.
Fig. 10 is a circuit diagram showing a configuration example of a submodule in a power conversion device according to a fourth embodiment.
Fig. 11 is a flowchart for illustrating a protective operation for the other submodule of a pair.
Fig. 12 is a cross-sectional view showing a conceptual configuration of a bypass switch in a power conversion device according to a fifth embodiment.
Fig. 13 is a flowchart showing an example of a procedure for evaluating the health of a bypass switch.

### DESCRIPTION OF EMBODIMENTS

Embodiments will be hereinafter described in detail with reference to the drawings. The same or corresponding parts are designated by the same reference characters and description thereof will not be repeated.

### First Embodiment.

### [Schematic Overall Configuration of Power Conversion Device]

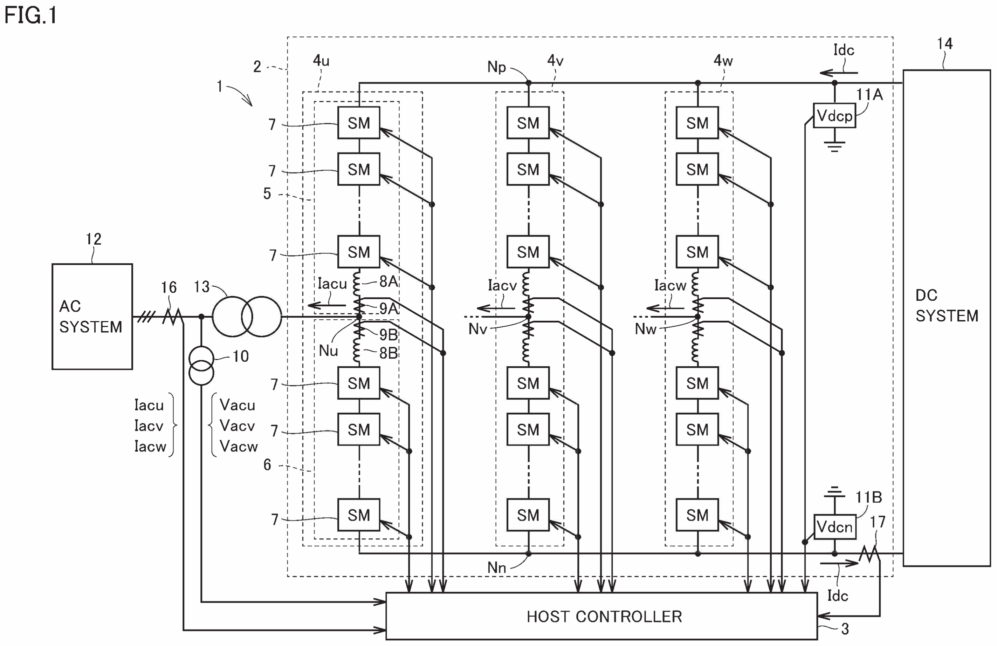

Fig. 1 is a schematic configuration diagram of a power conversion device 1 according to a first embodiment. Referring to Fig. 1, power conversion device 1 is configured in the form of a modular multilevel converter including a plurality of converter cells 7 (submodules SM) cascaded with each other. Power conversion device 1 performs power conversion between a DC system 14 and an AC system 12. Power conversion device 1 includes a power converter 2 and a host controller 3.

Power converter 2 includes a plurality of leg circuits 4u, 4v, 4w (described as a leg circuit 4 when collectively referred to or any one of them is referred to) connected in parallel with each other between a positive DC terminal (i.e., a high-potential-side DC terminal) Np and a negative DC terminal (i.e., a low-potential-side DC terminal) Nn.

Leg circuit 4 is provided for each of a plurality of phases of AC. Leg circuit 4 is connected between AC system 12 and DC system 14, and performs power conversion between these circuits. AC system 12 shown in Fig. 1 is a three-phase AC system, and three leg circuits 4u, 4v, 4w are provided for U phase, V phase, W phase, respectively.

AC input terminals Nu, Nv, Nw provided respectively in leg circuits 4u, 4v, 4w are connected to AC system 12 through a transformer 13. AC system 12 includes an AC power source and the like. To simplify the illustration, Fig. 1 does not show connection between AC input terminals Nv, Nw and transformer 13.

High-potential-side DC terminal Np and low-potential-side DC terminal Nn that are connected commonly to leg circuits 4 are connected to DC system 14. In the case of HVDC power transmission, DC system 14 is a DC transmission network. DC system 14 can also be regarded as a DC terminal of another power conversion device. In this case, two power conversion devices are coupled to form a BTB (Back To Back) system for connecting AC power systems that are different from each other in the rated frequency, for example.

The leg circuits may be connected to AC system 12 through an interconnection reactor, instead of transformer 13 in Fig. 1. Further, instead of AC input terminals Nu, Nv, Nw, primary windings may be provided in respective leg circuits 4u, 4v, 4w, and AC connection from leg circuits 4u, 4v, 4w to transformer 13 or the interconnection reactor may be implemented through secondary windings magnetically coupled with the primary windings. In this case, the primary windings may be reactors 8A, 8B described below. To summarize, electrical connection (i.e., DC or AC connection) from leg circuit 4 to AC system 12 is implemented through connecting parts such as AC input terminals Nu, Nv, Nw or the above-described primary windings provided in respective leg circuits 4u, 4v, 4w.

Leg circuit 4u includes an upper arm circuit 5 from high-potential-side DC terminal Np to AC input terminal Nu, and a lower arm circuit 6 from low-potential-side DC terminal Nn to AC input terminal Nu. A connection point, i.e., AC input terminal Nu, between upper arm circuit 5 and lower arm circuit 6 is connected to transformer 13. High-potential-side DC terminal Np and low-potential-side DC terminal Nn are connected to DC system 14. Upper arm circuit 5 and lower arm circuit 6 are collectively described as an arm circuit. Leg circuits 4v, 4w have a similar configuration to the above-described one, and therefore, the configuration of leg circuit 4u is representatively explained below.

Upper arm circuit 5 includes a plurality of cascaded submodules SM and reactor 8A. The plurality of submodules SM and reactor 8A are connected in series. Likewise, lower arm circuit 6 includes a plurality of cascaded submodules SM and reactor 8B. The plurality of submodules SM and reactor 8B are connected in series.

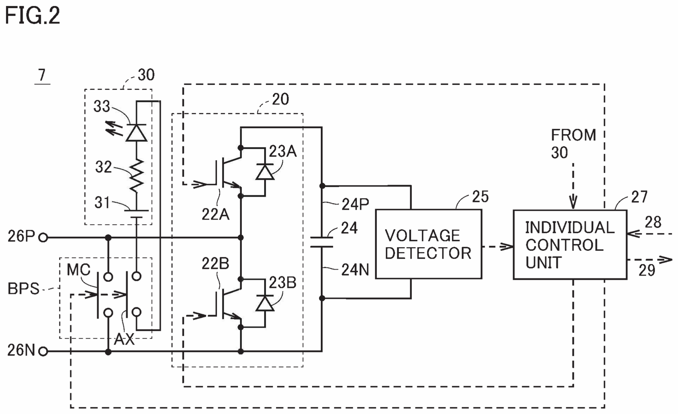

In the following description, Ncell+Rcell represents the number of submodules SM included in each of upper arm circuit 5 and lower arm circuit 6, where Ncell≥2 and Rcell≥1. Ncell represents the minimum number of submodules SM that are required for operation, and Rcell represents the number of redundant cells. Note that Ncell+Rcell submodules SM operate together, and therefore, there is no distinction between the redundant cells and the other cells. When one of Ncell+Rcell submodules SM fails, the failed cell is short-circuited by turning on of its bypass switch BPS (see Fig. 2). Accordingly, when Rcell submodules SM of Ncell+Rcell submodules SM fail, the remaining number of the redundant cells becomes zero. When another submodule SM fails, the number of submodules SM included in the arm becomes less than Ncell, and power converter 2 can no longer be used.

The position in which reactor 8A is inserted may be any position in upper arm circuit 5 of leg circuit 4u, and the position in which reactor 8B is inserted may be any position in lower arm circuit 6 of leg circuit 4u. More than one reactor 8A and more than one reactor 8B may be provided. Inductance values of the reactors may be different from each other. Alternatively, only reactor 8A of upper arm circuit 5, or only reactor 8B of lower arm circuit 6 may be provided. The transformer connection may be adjusted to cancel the magnetic flux of DC component current, and leakage reactance of the transformer may act on AC component current, as an alternative to the reactor. By providing reactors 8A, 8B, a sharp increase of fault current generated in the event of a fault in AC system 12 or DC system 14 can be suppressed.

Power conversion device 1 further includes, as detectors for measuring electrical quantities (current, voltage, and the like) to be used for control, an AC voltage detector 10, an AC current detector 16, DC voltage detectors 11A, 11B, arm current detectors 9A, 9B provided in each leg circuit 4, and a DC current detector 17. Signals detected by these detectors are input to host controller 3.

Although some of signal lines for the signals that are input from the detectors to host controller 3 and signal lines for the signals that are input and output between host controller 3 and each submodule SM are collectively depicted in Fig. 1 to simplify the illustration, they are, in practice, provided for each detector and each submodule SM. The signal lines may be provided separately for transmission and reception of the signals between each submodule SM and host controller 3. For example, the signal line may be implemented by an optical fiber.

Next, each detector is specifically described.

AC voltage detector 10 detects a U phase AC voltage Vacu, a V phase AC voltage Vacv, and a W phase AC voltage Vacw of AC system 12. In the following description, AC voltages Vacu, Vacv, and Vacw of the respective phases are also collectively described as an AC voltage Vac.

AC current detector 16 detects a U phase AC current Iacu, a V phase AC current Iacv, and a W phase AC current Iacw of AC system 12. In the following description, AC currents lacu, Iacv, and lacw of the respective phases are also collectively described as an AC current Iac.

DC voltage detector 11A detects a DC voltage Vdcp of high-potential-side DC terminal Np connected to DC system 14. DC voltage detector 11B detects a DC voltage Vdcn of low-potential-side DC terminal Nn connected to DC system 14. The difference between high-potential-side DC voltage Vdcp and low-potential-side DC voltage Vdcn is defined as a DC voltage Vdc.

DC current detector 17 detects a DC current Idc flowing through high-potential-side DC terminal Np or low-potential-side DC terminal Nn.

Arm current detectors 9A and 9B provided in U phase leg circuit 4u detect an upper arm current Ipu flowing in upper arm circuit 5 and a lower arm current Inu flowing in lower arm circuit 6, respectively. Arm current detectors 9A and 9B provided in V phase leg circuit 4v detect an upper arm current Ipv and a lower arm current Inv, respectively. Arm current detectors 9A and 9B provided in W phase leg circuit 4w detect an upper arm current Ipw and a lower arm current Inw, respectively. In the following description, upper arm currents Ipu, Ipv, Ipw are also collectively described as an upper arm current Iarmp, lower arm currents Inu, Inv, Inw are also collectively described as a lower arm current Iarmn, and upper arm current Iarmp and lower arm current Iarmn are also collectively described as an arm current Iarm.

### [Configuration Example of Converter Cell]

Fig. 2 is a circuit diagram showing an example of the converter cell constituting each leg circuit in Fig. 1. Converter cell 7 (submodule SM) shown in Fig. 1 includes a half-bridge-type conversion circuit 20, a power storage element 24, a voltage detector 25, an individual control unit 27, a bypass switch BPS, and a lighting circuit 30. Conversion circuit 20 is also referred to as a bridge circuit.

Half-bridge-type conversion circuit 20 includes switching elements 22A, 22B connected in series with each other, and diodes 23A, 23B. Diodes 23A, 23B are connected in anti-parallel (i.e., in parallel in the reverse-bias direction) with switching elements 22A, 22B, respectively. Diodes 23A, 23B are provided for protection when a reverse voltage is applied to switching elements 22A, 22B. Switching elements 22A, 22B and diodes 23A, 23B are hereinafter described as a switching element 22 and a diode 23, respectively, when collectively referred to or any one of them is referred to.

Power storage element 24 is connected in parallel with the series-connected circuit made up of switching elements 22A, 22B and holds a DC voltage. A DC capacitor is typically used as power storage element 24. A connection node between switching elements 22A, 22B is connected to a high-potential-side input/output terminal 26P. A connection node between switching element 22B and power storage element 24 is connected to a low-potential-side input/output terminal 26N.

Typically, input/output terminal 26P is connected to input/output terminal 26N of submodule SM adjacent on the positive electrode side. Input/output terminal 26N is connected to input/output terminal 26P of submodule SM adjacent on the negative electrode side.

As each of switching elements 22A, 22B, a self-arc-extinguishing-type switching element is used, of which ON operation and OFF operation can both be controlled. An IGBT (Insulated Gate Bipolar Transistor) or a GCT (Gate Commutated Turn-off thyristor) is used, for example, as each of switching elements 22A, 22B.

The conversion circuit of submodule SM is not limited to half-bridge-type conversion circuit 20 as described above. For example, a full-bridge-type conversion circuit or a three-quarter-bridge-type conversion circuit may be used to form submodule SM.

Bypass switch BPS is connected between input/output terminals 26P, 26N. In the case of the present embodiment, a mechanical switch is used as bypass switch BPS. Bypass switch BPS includes a main contact MC and an auxiliary contact AX that opens/closes in conjunction with main contact MC. By closing main contact MC, high-potential-side input/output terminal 26P and low-potential-side input/output terminal 26N are short-circuited.

Bypass switch BPS is used to short-circuit converter cell 7 (submodule SM) when any of the elements of this submodule SM fails. Thus, even when any of the plurality of submodules SM fails, the operation of power conversion device 1 can be continued using other submodules SM.

When bypass switch BPS is turned on, it is necessary to check the health of the contact after manual opening. In the case of an inflator type in which the contact is turned on by ignition of an explosive, the bypass switch needs to be replaced. Therefore, when the operation of the system cannot be continued even when the bypass switch is turned on, the bypass switch should not be turned on in principle. The intended purpose of using bypass switch BPS is to short-circuit failed submodule SM to thereby continue the operation.

A determination of whether or not to turn on bypass switch BPS may be made by host controller 3 or by individual control unit 27 of each submodule SM. In the former case, host controller 3 determines a failure of each submodule SM, and transmits a command to turn on bypass switch BPS to individual control unit 27 of submodule SM that is determined as having failed. Therefore, the former case is disadvantageous in that the command to turn on bypass switch BPS cannot be issued in the event of a communication failure between host controller 3 and submodule SM.

In the latter case, individual control unit 27 of each submodule SM determines a failure, and turns on corresponding bypass switch BPS when the failure is determined. This latter method is employed in the present embodiment. However, both cases are disadvantageous in that bypass switch BPS cannot be turned on when a mechanism operating bypass switch BPS fails. Thus, it is important to confirm whether or not turning on of bypass switch BPS has been completed, to have backup means for turning on bypass switch BPS, and to check the health of bypass switch BPS.

It is also possible to combine the former case and the latter case described above. Duplexing bypass switch BPS itself is difficult to employ due to increased cost and space. Alternatively, it is possible to turn on bypass switch BPS even when a power source is abnormal by providing a backup capacitor.

Lighting circuit 30 includes a DC power source 31, a resistive element 32, and a light-emitting element 33 such as an LED (Light Emitting Diode). These components are connected in series with auxiliary contact AX. When auxiliary contact AX closes, lighting circuit 30 conducts, causing light-emitting element 33 to light up. Information indicating that lighting circuit 30 is conducting due to closing of auxiliary contact AX (for example, a voltage generated in resistive element 32) is transmitted to individual control unit 27.

DC power source 31 described above may be an independent battery, or power may be supplied from individual control unit 27 via a backup capacitor. Thus, lighting circuit 30 can be operated for at least an amount of time required to indicate that auxiliary contact AX has closed, even when the power source is abnormal.

Voltage detector 25 detects a voltage across power storage element 24 (i.e., a capacitor voltage Vc). A detected value at voltage detector 25 is input to individual control unit 27.

Individual control unit 27 receives various commands 28 including a control command and a protection command from host controller 3. Based on received various commands 28, individual control unit 27 generates a gate signal for controlling opening/closing of switching elements 22A, 22B constituting conversion circuit 20. Individual control unit 27 further transmits a signal 29 to host controller 3, signal 29 including abnormality determination information on submodule SM, the capacitor voltage detected by voltage detector 25, and opening/closing information on bypass switch BPS.

Specifically, when a voltage command value as the control command is received, individual control unit 27 performs phase shift PWM (Pulse Width Modulation) control to cause one of switching elements 22A, 22B to enter the ON state and the other to enter the OFF state based on the received voltage command value.

Specifically, while switching element 22A is in the ON state and switching element 22B is in the OFF state, the voltage across power storage element 24 is applied between input/output terminals 26P and 26N. Conversely, while switching element 22A is in the OFF state and switching element 22B is in the ON state, the voltage between input/output terminals 26P and 26N is 0 V. Thus, submodule SM can cause switching elements 22A, 22B to enter the ON state alternately to thereby output zero voltage and a positive voltage depending on the voltage of power storage element 24.

When a gate block command as the protection command is received, individual control unit 27 causes all of switching elements 22A, 22B constituting conversion circuit 20 to enter the OFF state.

Individual control unit 27 further performs self-diagnosis to determine whether or not corresponding submodule SM has failed. The self-diagnosis generally involves determining whether or not capacitor voltage Vc is abnormal (i.e., is equal to or higher than an upper threshold value, or equal to or lower than a lower threshold value). This is because the capacitor voltage is essential for control operation and is therefore available due to the provision of voltage detector 25, and also because a failure of submodule SM often manifests itself as an abnormality of the capacitor voltage. Individual control unit 27 may be configured to perform self-diagnosis to determine an abnormality of the power source, an abnormality of a communication system and the like, in addition to the abnormality of capacitor voltage Vc.

When startup of the power converter is stopped, the capacitor voltage decreases even though there is no failure. Therefore, host controller 3 transmits a startup-stop signal to each submodule SM in order to cause each submodule SM to wait for bypass switch BPS to be turned on. This prevents unnecessary turning on of bypass switch BPS when startup of the power converter is stopped.

An abnormality of the capacitor voltage may also occur due to a severe system fault or a failure within a converter station. In this case, it is useless to turn on bypass switch BPS in an attempt to continue the operation of power conversion device 1. Therefore, host controller 3 determines these faults and transmits a BPS turn-on wait signal to each submodule SM. Thus, each submodule SM waits for bypass switch BPS to be turned on. However, even in this case, if the capacitor voltage reaches the breakdown voltage of submodule SM, bypass switch BPS is turned on by determination of individual control unit 27.

Individual control unit 27 described above may be implemented by a dedicated circuit such as an ASIC (Application Specific Integrated Circuit), or may be implemented using an FPGA (Field Programmable Gate Array) or the like. Alternatively, it may be implemented based on a computer including a CPU (Central Processing Unit) and a memory, or may be implemented by a combination of two or more of the above.

Submodule SM is provided with a power source circuit (not shown) that generates a drive voltage for individual control unit 27 based on the voltage of power storage element 24. Individual control unit 27 is therefore unable to operate when the voltage of power storage element 24 is low.

### [Configuration Example of Bypass Switch]

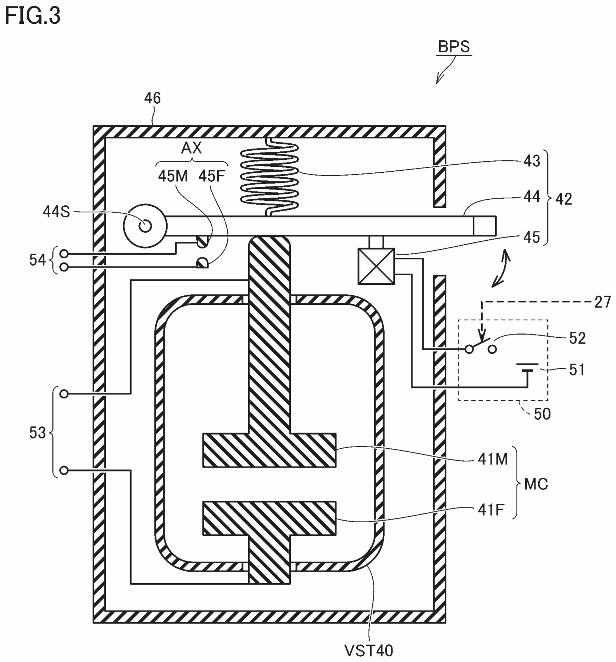

Fig. 3 is a cross-sectional view showing a conceptual configuration of the bypass switch in Fig. 2. Fig. 3 shows a conceptual diagram of a configuration example of spring-type bypass switch BPS.

Referring to Fig. 3, bypass switch BPS includes a VST (Vacuum Switching Valve) 40 having built-in main contact MC, auxiliary contact AX, a contact operating mechanism 42, a housing 46, a drive circuit 50, a main contact terminal pair 53, and an auxiliary contact terminal pair 54. VST 40, contact operating mechanism 42, and auxiliary contact AX are placed inside housing 46. Main contact MC may be placed in the air instead of in VST 40.

Main contact MC includes a movable contact 41M and a fixed contact 41F, and auxiliary contact AX includes a movable contact 45M and a fixed contact 45F. Main contact terminal pair 53 is connected to movable contact 41M and fixed contact 41F of main contact MC, and auxiliary contact terminal pair 54 is connected to movable contact 45M and fixed contact 45F of auxiliary contact AX. Main contact terminal pair 53 is further connected to input/output terminals 26P, 26N in Fig. 2, and auxiliary contact terminal pair 54 is further connected to lighting circuit 30 in Fig. 2.

Contact operating mechanism 42 includes a spring 43, a manual lever 44, and a latch 45. While force is stored in spring 43, movable contact 41M and fixed contact 41F of main contact MC are separated from each other, and movable contact 45M and fixed contact 45F of auxiliary contact AX are separated from each other. When force is released from spring 43, movable contact 41M and fixed contact 41F of main contact MC come into contact with each other, and movable contact 45M and fixed contact 45F of auxiliary contact AX come into contact with each other.

Manual lever 44 pivots about a rotation shaft 44S. Force is stored in spring 43 by manual movement of manual lever 44. Latch 45 locks manual lever 44 in this force-stored state. Means for storing force in spring 43 is not limited to manual lever 44. For example, a manual handle or an electric motor may be used instead of manual lever 44.

In response to a command from individual control unit 27 in Fig. 2, drive circuit 50 passes a drive current through latch 45 of contact operating mechanism 42 to thereby operate a relay built into latch 45. Thus, manual lever 44 is unlocked and force is released from spring 43, causing movable contact 41M to be pushed by manual lever 44. As a result, main contact MC conducts in VST 40, and auxiliary contact AX conducts. The conduction of auxiliary contact AX can be visually confirmed by light emission from light-emitting element 33, and is also detected by individual control unit 27 via lighting circuit 30. The conduction of main contact MC can also be visually confirmed from a changed position of manual lever 44.

As shown in Fig. 3, drive circuit 50 includes, as an example, a DC power source 51 and a switch 52. When switch 52 conducts by an ON signal from individual control unit 27, a current can be passed through the relay in latch 45.

Inflator-type contact operating mechanism 42 may be used instead of spring-type contact operating mechanism 42. In an explosive-type inflator, a gas generation agent is ignited by the current supplied from drive circuit 50, and gas is generated by combustion of the gas generation agent. A gas pressure of the generated gas pushes out movable contact 41M of main contact MC and movable contact 45M of auxiliary contact AX. As a result, main contact MC and auxiliary contact AX conduct.

Auxiliary contact AX is described above as being a make contact that is normally in the open state and enters the closed state when bypass switch BPS is turned on. Alternatively, a break contact that is normally in the closed state and enters the open state when bypass switch BPS is turned on may be used as auxiliary contact AX. In this case, by providing an inversion circuit in lighting circuit 30, light-emitting element 33 may light up while auxiliary contact AX is in the open state, or it may be confirmed that bypass switch BPS has been turned on by turning off of light-emitting element 33. In other words, light-emitting element 33 may start emitting light or stop emitting light by conduction or disconnection of lighting circuit 30 when auxiliary contact AX closes, or may start emitting light or stop emitting light by conduction or disconnection of lighting circuit 30 when auxiliary contact AX opens.

### [Example of Hardware Configuration of Controller]

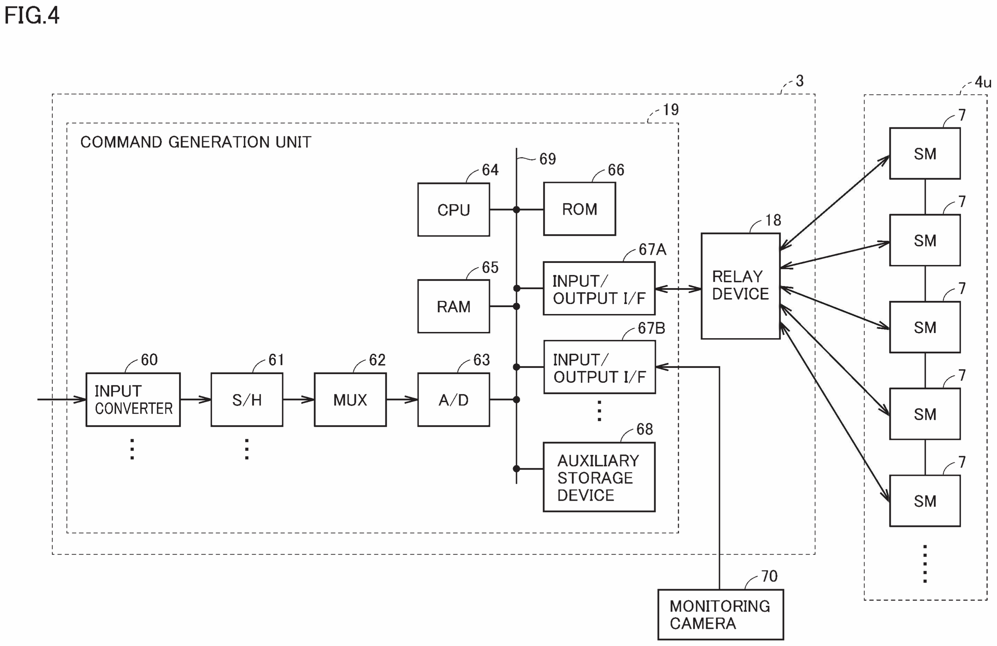

Fig. 4 is a block diagram showing a hardware configuration example of the host controller. Fig. 4 shows an example in which host controller 3 is implemented by a computer. Further, in the example shown in Fig. 4, the computer (i.e., a command generation unit 19) is connected to each submodule SM through a relay device 18.

Referring to Fig. 4, host controller 3 includes command generation unit 19 and relay device 18. Command generation unit 19 generates various commands 28 including a control command and a protection command for controlling operation of each submodule SM, based on a detected value of each of AC voltage Vac, AC current Iac, DC voltage Vdc, DC current Idc, arm current Iarm, and capacitor voltage Vc of each submodule SM. Command generation unit 19 transmits generated various commands 28 to each submodule SM through relay device 18.

Command generation unit 19 includes one or more input converters 60, one or more sample hold (S/H) circuits 61, a multiplexer (MUX) 62, and an A/D (Analog-to-Digital) converter 63. Command generation unit 19 further includes one or more CPUs 64, a RAM (Random Access Memory) 65, and a ROM (Read Only Memory) 66. Command generation unit 19 further includes two or more input/output interfaces (I/Fs) 67A, 67B, ..., an auxiliary storage device 68, and a bus 69 connecting the above components to one another.

Input converter 60 includes an auxiliary transformer (not shown) for each input channel. Each auxiliary transformer converts a detection signal from each electrical quantity detector in Fig. 1 into a signal at a voltage level suitable for subsequent signal processing.

Sample hold circuit 61 is provided for each input converter 60. Sample hold circuit 61 samples and holds a signal representing the electrical quantity received from corresponding input converter 60 at a prescribed sampling frequency.

Multiplexer 62 sequentially selects signals held by the plurality of sample hold circuits 61. A/D converter 63 converts a signal selected by multiplexer 62 into a digital value. By providing a plurality of A/D converters 63, A/D conversion may be executed in parallel for detection signals of a plurality of input channels.

CPU 64 controls command generation unit 19 as a whole, and performs computational processing in accordance with a program. RAM 65 as a volatile memory and ROM 66 as a nonvolatile memory are used as a main memory of CPU 64. ROM 66 stores a program, set values for signal processing, and the like. Auxiliary storage device 68 is a nonvolatile memory having a larger capacity than ROM 66, and stores a program, data such as electrical quantity detected values, and the like.

Input/output interfaces 67A, 67B, ... are interface circuits for communication between CPU 64 and an external device. In the case of Fig. 1, command generation unit 19 is connected to relay device 18 via input/output interface 67A. Further, command generation unit 19 is connected to a monitoring camera 70 via input/output interface 67B, and obtains image data captured by monitoring camera 70.

Unlike the example of Fig. 4, command generation unit 19 can at least partially be implemented using a circuit such as an FPGA and an ASIC. The function of each functional block can at least partially be implemented by an analog circuit.

Relay device 18 is connected between command generation unit 19 and each submodule SM. Relay device 18 is connected to each submodule SM through a star-type network. Typically, relay device 18 is implemented by a dedicated circuit and may be partially or entirely implemented by an FPGA.

Relay device 18 transmits various commands 28 received from command generation unit 19 to each submodule SM. Further, relay device 18 receives a value of the voltage of power storage element 24 (i.e., capacitor voltage Vc) measured by voltage detector 25 of submodule SM. Although relay device 18 is not a required component, the provision of relay device 18 can suppress traffic and throughput of CPU 64, thereby enabling fast and low latency communication with a small number of communication lines.

### [Physical Arrangement of Converter Cells and Confirmation of Operation of Bypass Switch]

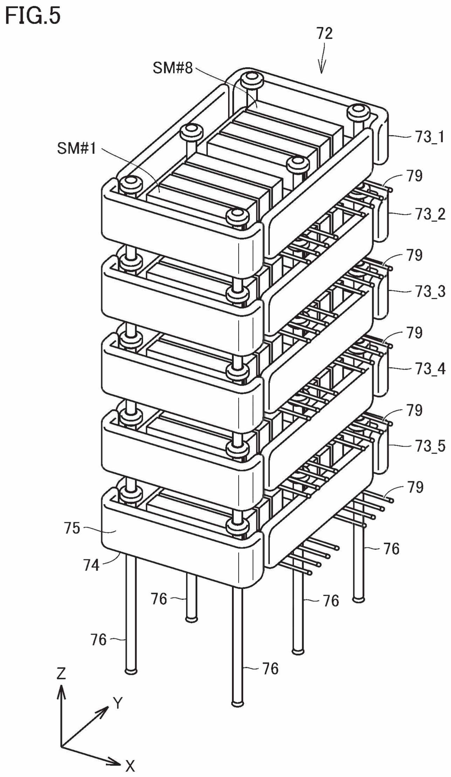

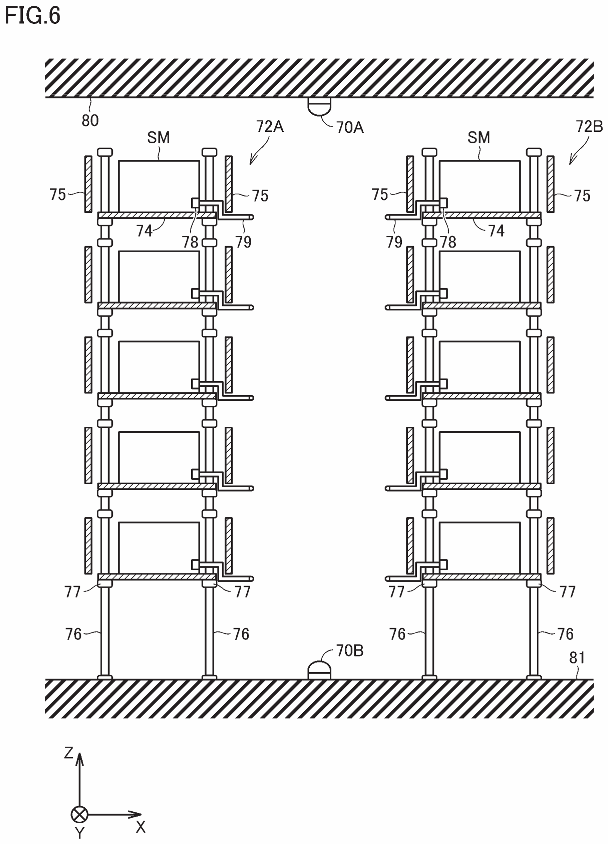

Fig. 5 is an external view for illustrating a physical arrangement of a plurality of converter cells. Fig. 6 is a cross-sectional view as seen in a Y direction in Fig. 5. A configuration shown in Figs. 5 and 6 is referred to as a converter valve tower 72 (72A, 72B).

Converter valve tower 72 (72A, 72B) includes a plurality of converter modules 73_1 to 73_5 stacked in the vertical direction (Z direction). Each converter module 73 includes a plurality of submodules SM (eight SM#1 to SM#8 in the case of Fig. 5) arranged in the horizontal direction (Y direction). Each converter module 73 is supported by support columns 76 and insulators 77. Each converter module 73 has a side surface enclosed by a shield plate 75. Shield plate 75 is provided to prevent partial discharge due to concentration of electric field.

A front surface of a housing of each submodule SM is provided with a display window 78 for emitting light from light-emitting element 33 that indicates an operation state of bypass switch BPS. Since display window 78 is blocked by shield plate 75, a light guiding fiber 79 for guiding light from light-emitting element 33 is connected to display window 78. Light guiding fiber 79 is arranged to extend from display window 78 through a gap between shield plate 75 and a bottom plate 74 to a portion in front of shield plate 75. The operation state of bypass switch BPS can be visually checked based on whether or not a tip end of light guiding fiber 79 is emitting light. For example, a light guiding material such as plastic or glass may be used as light guiding fiber 79.

In power conversion device 1 according to the present embodiment, monitoring camera 70 equipped with a fish-eye lens or a wide-angle lens is used to quickly identify whether or not the tip ends of multiple light guiding fibers 79 connected respectively to multiple submodules SM are emitting light. Specifically, as shown in Fig. 6, converter valve towers 72A, 72B are disposed such that the sides where light guiding fibers 79 to be identified are attached face each other. Monitoring camera 70 (70A, 70B) is installed on a ceiling 80 or a floor surface 81 between converter valve towers 72A, 72B. With such an arrangement, images of multiple light guiding fibers 79 can be simultaneously captured.

Image data captured by monitoring camera 70 is transmitted, for example, to host controller 3. Host controller 3 performs image processing on the captured image data. Specifically, host controller 3 corrects image distortions caused by the fish-eye lens, identifies a position of light guiding fiber 79 attached to each submodule SM, and determines whether or not bypass switch BPS is operating based on whether or not light guiding fiber 79 is emitting light. Such image processing can be performed at high speed.

When contact operating mechanism 42 of bypass switch BPS is an explosive-type inflator, light generated at the time of ignition and combustion of a gas generation agent may be collected and transmitted outside submodule SM by a light guiding fiber.

### [Operation of Turning on Bypass Switch and Confirmation Procedure]

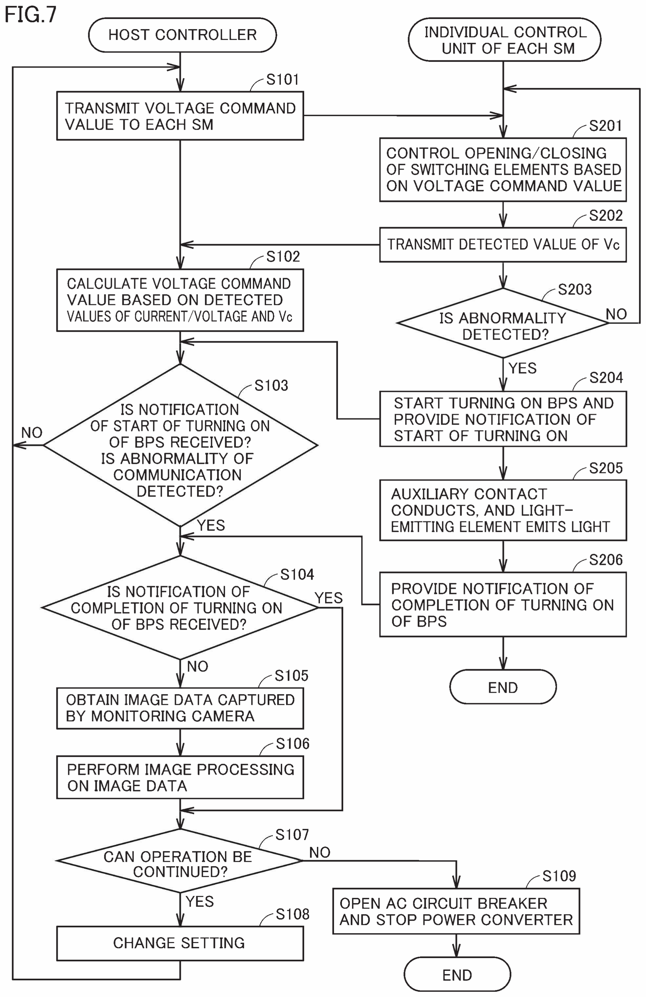

Fig. 7 is a flowchart showing an operation of turning on a bypass switch and a confirmation procedure. The description given thus far is summarized with reference to Fig. 7.

During normal operation, host controller 3 generates a voltage command value for controlling operation of each submodule SM, based on a detected value of each of AC voltage Vac, AC current Iac, DC voltage Vdc, DC current Idc, arm current Iarm, and capacitor voltage Vc of each submodule SM (S102). Further, host controller 3 transmits the generated voltage command value to each submodule SM (S101). During normal operation (NO in S 103), these steps are repeated.

During normal operation, individual control unit 27 of each submodule SM controls opening/closing of switching elements 22A, 22B based on the voltage command value received from host controller 3 (S201). Further, individual control unit 27 of each submodule SM transmits the detected value of capacitor voltage Vc to host controller 3 (S202). During normal operation (NO in S203), these steps are repeated.

Individual control unit 27 of submodule SM in which an abnormality has been detected (hereinafter referred to as failed submodule SM) (YES in S203) starts turning on bypass switch BPS by transmitting a turn-on command to bypass switch BPS, and further notifies host controller 3 of the start of turning on (S204). For example, when the detected value of capacitor voltage Vc exceeds an upper limit or a lower limit of a threshold range, and when a turn-on wait signal for bypass switch BPS or a startup-stop signal has not been received from host controller 3, it is determined that submodule SM is abnormal.

When main contact MC of bypass switch BPS enters the closed state in response to the turn-on command, auxiliary contact AX conducts, and light-emitting element 33 emits light (S205). When closing of auxiliary contact AX is confirmed based on a signal from lighting circuit 30, individual control unit 27 of failed submodule SM notifies host controller 3 of completion of turning on of bypass switch BPS (S206).

On the other hand, when a notification of start of turning on of bypass switch BPS is received, or when an abnormality of communication with any of bypass switches BPS is detected (YES in S103), host controller 3 proceeds to a flow (S104 to S108) for checking whether or not the operation of power converter 2 can be continued.

Specifically, when a notification of completion of turning on of bypass switch BPS has not been received from failed submodule SM that provided the notification of start of turning on of bypass switch BPS (NO in S104), host controller 3 itself confirms that bypass switch BPS has been turned on. In other words, host controller 3 obtains image data captured by monitoring camera 70 (S105). Then, host controller 3 performs image processing on the obtained captured image data to thereby determine whether or not light-emitting element 33 of each submodule SM is emitting light (S106).

When it is determined that the operation of power converter 2 cannot be continued as a result of the above determination (NO in S107), host controller 3 opens an AC circuit breaker (not shown in Fig. 1) between power converter 2 and AC system 12, and stops power converter 2 (S109). For example, when it cannot be confirmed that bypass switch BPS of failed submodule SM has been turned on from the result of the image processing on the monitoring camera image, host controller 3 determines that the operation cannot be continued. Alternatively, when it cannot be confirmed that bypass switch BPS of a certain submodule SM has been turned on even though capacitor voltage Vc received from this submodule SM exceeds the threshold range, host controller 3 determines that the operation cannot be continued.

On the other hand, when the notification of completion of turning on of bypass switch BPS has been received from failed submodule SM (YES in S104), or when it can be confirmed that turning on of bypass switch BPS of failed submodule SM has been completed from the result of the image processing on the monitoring camera image even though the notification of completion of turning on of bypass switch BPS has not been received from this failed submodule SM (NO in S104), host controller 3 determines that the operation of power converter 2 can be continued (YES in S107). In this case, host controller 3 changes the setting of a control parameter such as the number of valid submodules (S108), and then continues the operation of power converter 2 (returns to S101).

Instead of the procedure described above, host controller 3 may confirm that bypass switch BPS has been turned on based on the image data captured by monitoring camera 70 (S105, S106), regardless of whether or not the notification of completion of turning on of bypass switch BPS has been received (YES or NO in S104). In other words, the confirmation of completion of turning on of bypass switch BPS may be made in parallel by host controller 3 and individual control unit 27 of failed submodule SM.

In order to confirm whether or not bypass switches BPS of all submodules SM constituting power converter 2 have been turned on, a plurality of monitoring cameras 70 are prepared. Each monitoring camera 70 is positioned to enable confirmation of whether or not light-emitting elements 33 are emitting light for as many submodules SM as possible.

### [Effects of First Embodiment]

As described above, in power conversion device 1 according to the first embodiment, each submodule SM is provided with lighting circuit 30 connected to auxiliary contact AX of bypass switch BPS. When auxiliary contact AX closes, lighting circuit 30 conducts, causing light-emitting element 33 to emit light. The light from light-emitting element 33 is guided outside shield plate 75 by light guiding fiber 79, which enables easy identification of whether or not light-emitting element 33 of each submodule SM is emitting light.

Here, the plurality of monitoring cameras 70 are provided on ceiling 80 and/or floor surface 81 of a room in which the plurality of submodules SM are housed in the form of converter valve tower 72. Each monitoring camera 70 is positioned to enable capturing of images of light emitted from light-emitting elements 33 of as many submodules SM as possible at a time. Thus, information on whether or not light-emitting elements 33 of multiple submodules SM constituting power converter 2 are emitting light can be contained in a small number of pieces of image data.

Host controller 3 can perform image processing on the image data captured by monitoring camera 70, to thereby determine an operation state of bypass switch BPS of each submodule SM constituting power converter 2. As described above, host controller 3 can directly and reliably know the operation state of bypass switch BPS without individual control unit 27 of each submodule SM, which can lead to improved operation continuity and operation rate of power converter 2.

The means for checking the operation state of bypass switch BPS is not limited to the light emission from light-emitting element 33. For example, the means may be anything that can be visually checked, such as quenching of light from light-emitting element 33, discoloration of a specific part, a change in reflectance of a specific part, or a change in shape or position of a specific part. Therefore, more generally speaking, each submodule SM includes a notification unit that provides a visual notification indicating operation of bypass switch BPS. Then, monitoring camera 70 collectively captures images of the respective notification units of the plurality of submodules SM as one piece of image data, to thereby obtain information on the operation state of each bypass switch BPS.

Further, the notification unit described above may have a plurality of features visually distinguishable from each other. For example, a visual change in a first feature is associated with the operation of bypass switch BPS, and a visual change in a second feature is associated with a failed state of corresponding submodule SM. The failed state represents, for example, the type of failure such as an abnormality of capacitor voltage Vc, an abnormality of the power source, or an abnormality of communication. Host controller 3 identifies changes in the plurality of features of the notification unit based on the image data captured by monitoring camera 70.

As a specific example of the plurality of features described above, the first feature may be whether or not light-emitting element 33 is emitting light, and the second feature may be a difference in color that occurs when light-emitting element 33 emits light. Alternatively, the plurality of features may be represented by providing a plurality of light-emitting elements 33 at different positions.

### Second Embodiment.

In a second embodiment, an example in which a specific part is changed in position when bypass switch BPS is operated will be described as a modification of the notification unit described above.

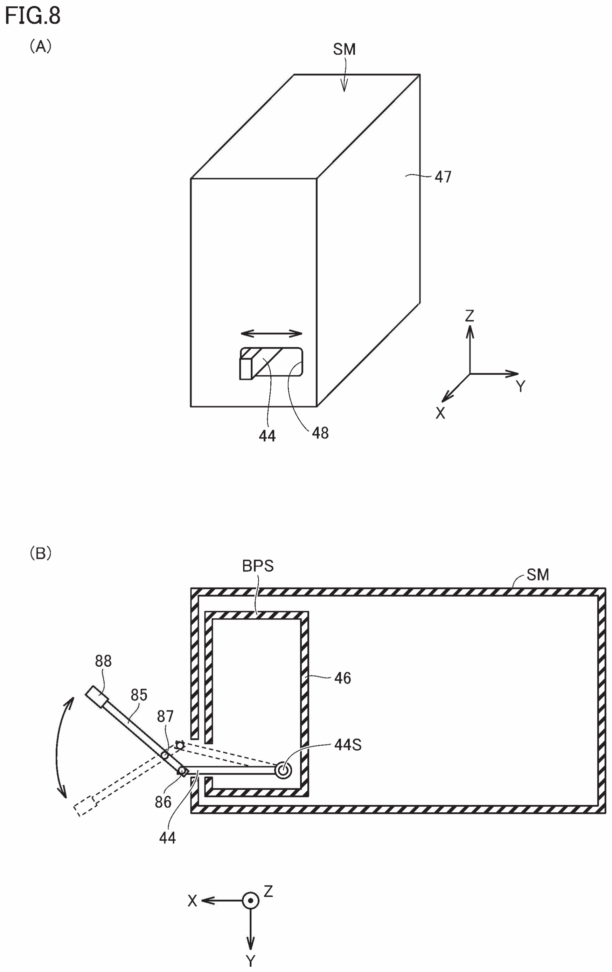

Fig. 8 is a diagram for illustrating the modification of the notification unit that provides a notification of the operation state of the bypass switch. Fig. 8 (A) shows an external view of submodule SM, and Fig. 8 (B) conceptually shows a cross-sectional view of submodule SM as seen in a Z direction.

Referring to Fig. 8 (A), a tip end portion of manual lever 44 constituting contact operating mechanism 42 in Fig. 3 protrudes from a laterally long hole 48 formed in a front surface of a housing 47 of submodule SM. When bypass switch BPS is operated, the tip end portion of manual lever 44 is moved along the longitudinal direction of hole 48. Therefore, it can be confirmed whether or not bypass switch BPS has been operated based on the position of the tip end portion of manual lever 44.

However, the length of movement of manual lever 44 is about the same as the distance between movable contact 41M and fixed contact 41F of main contact MC, which is not very long, and thus does not provide good visibility. In order to increase the length of movement to increase the visibility, therefore, a lever 85 is attached to the tip end portion of manual lever 44.

As shown in Fig. 8 (B), a point of force 86 of lever 85 is connected to the tip end of manual lever 44 and is moved when manual lever 44 is moved. A marker such as reflective tape is attached to a point of action 88 of lever 85 to increase the visibility. Since the distance from point of action 88 to a fulcrum 87 is longer than the distance from point of force 86 to fulcrum 87, the length of movement can be increased. Although fulcrum 87 is provided between point of force 86 and point of action 88 in Fig. 8 (B), point of force 86 and point of action 88 may be provided on the same side with respect to fulcrum 87.

When shield plate 75 is provided on a front surface of submodule SM, lever 85 is disposed to protrude forward through a gap in shield plate 75.

The structure of submodule SM described above can increase the visibility of the operation state of bypass switch BPS, thereby improving safety and work efficiency of a worker performing maintenance work. Further, automatic detection of the operation state of bypass switch BPS by monitoring camera 70 is facilitated.

The means for changing the position of a specific part when bypass switch BPS is operated is not limited to the combination of manual lever 44 and lever 85 described above. More generally, a specific part that is visible from outside submodule SM may be configured to be changed in position in conjunction with movable contact 41M of main contact MC.

### Third Embodiment.

In third and fourth embodiments, means for turning on bypass switch BPS in a backup manner when bypass switch BPS cannot be turned on due to a failure of individual control unit 27 of submodule SM will be described.

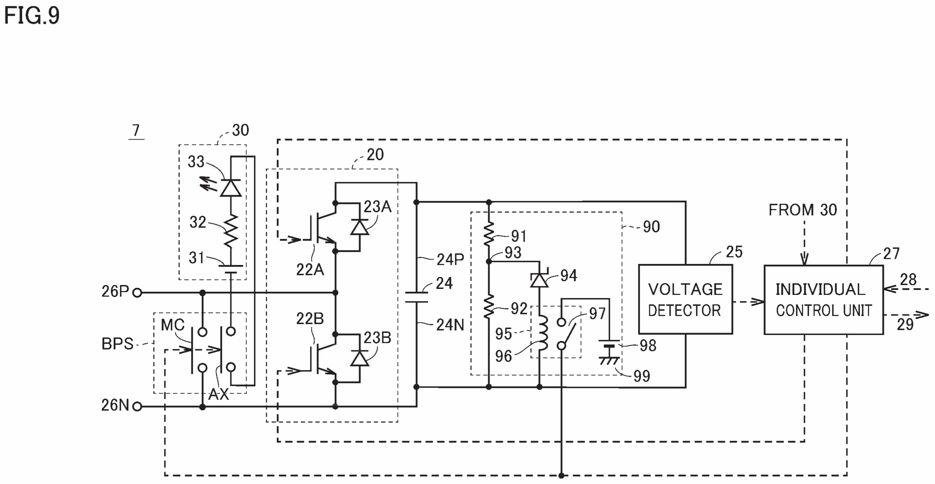

Fig. 9 is a circuit diagram showing a configuration example of a submodule in a power conversion device according to the third embodiment. Submodule SM (converter cell 7) in Fig. 9 differs from submodule SM in Fig. 2 in that an abnormality detection unit 90 is further provided. When the voltage of power storage element 24 (capacitor voltage Vc) exceeds an upper threshold value, abnormality detection unit 90 outputs a signal for turning on bypass switch BPS (main contact MC and auxiliary contact AX). The configuration of Fig. 9 is otherwise similar to that of Fig. 2, and therefore, the same or corresponding parts are designated by the same reference characters and will not be described again.

Specifically, in the example shown in Fig. 9, abnormality detection unit 90 includes resistive elements 91, 92 constituting a voltage divider circuit for dividing the voltage of power storage element 24, a Zener diode 94, a relay 95, and a DC power source 98. Relay 95 includes an electromagnetic coil 96 and a switch 97. Resistive elements 91, 92 are connected in series between a high-potential-side node 24P and a low-potential-side node 24N of power storage element 24. Zener diode 94 and electromagnetic coil 96 are connected in series between a connection node (also referred to as a voltage divider node 93) between resistive elements 91, 92 and low-potential-side node 24N of power storage element 24.

According to the configuration of abnormality detection unit 90 described above, when a voltage of voltage divider node 93 exceeds a Zener voltage of Zener diode 94 (which corresponds to the upper threshold value), a current flows through electromagnetic coil 96, causing switch 97 to conduct. Thus, a voltage of DC power source 98 is applied to bypass switch BPS, causing main contact MC and auxiliary contact AX to conduct. More specifically, when contact operating mechanism 42 is of the spring type shown in Fig. 3, latch 45 is directly released by abnormality detection unit 90. When contact operating mechanism 42 is of the explosive-type inflator type, abnormality detection unit 90 directly ignites and combusts a gas generation agent.

As described above, by providing abnormality detection unit 90 that operates independently of individual control unit 27, bypass switch BPS of failed submodule SM can be turned on even when individual control unit 27 of this submodule SM is abnormal. This can ensure reliability of turning on of bypass switch BPS, which can lead to improved operation continuity and operation rate of power converter 2.

### Fourth Embodiment.

In a fourth embodiment, means for turning on bypass switch BPS of failed submodule SM in a backup manner by a method different from that of the third embodiment will be disclosed.

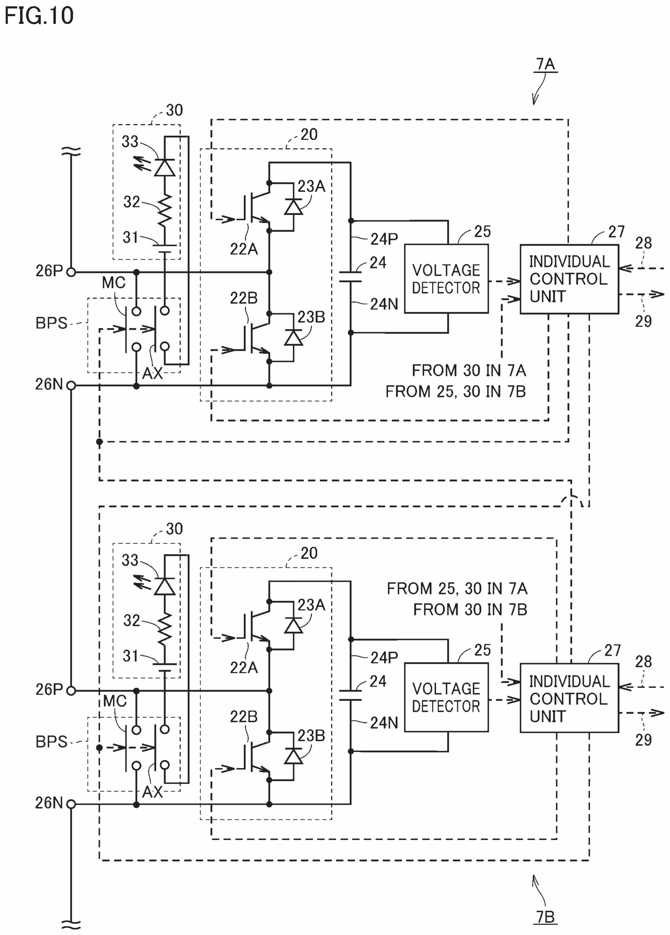

Fig. 10 is a circuit diagram showing a configuration example of submodule SM in a power conversion device according to the fourth embodiment. The power conversion device according to the present embodiment differs from the power conversion device according to the first embodiment in that every two adjacent submodules constitute a pair of submodules. Fig. 10 shows a pair of submodules 7A, 7B.

As shown in Fig. 10, individual control unit 27 of submodule 7A obtains a detected value of capacitor voltage Vc from its own voltage detector 25, and obtains operation information on its own auxiliary contact AX via its own lighting circuit 30. Individual control unit 27 of submodule 7A can also output a signal for turning on its own bypass switch BPS.

Individual control unit 27 of submodule 7A further obtains a detected value of capacitor voltage Vc from the other voltage detector 25, and obtains operation information on the other auxiliary contact AX via the other lighting circuit 30. Individual control unit 27 of submodule 7A can also output a signal for turning on the other bypass switch BPS.

This is also applicable to submodule 7B that constitutes the pair with submodule 7A. The configuration of Fig. 10 is otherwise similar to that of Fig. 2, and therefore, the same or corresponding parts are designated by the same reference characters and will not be described again.

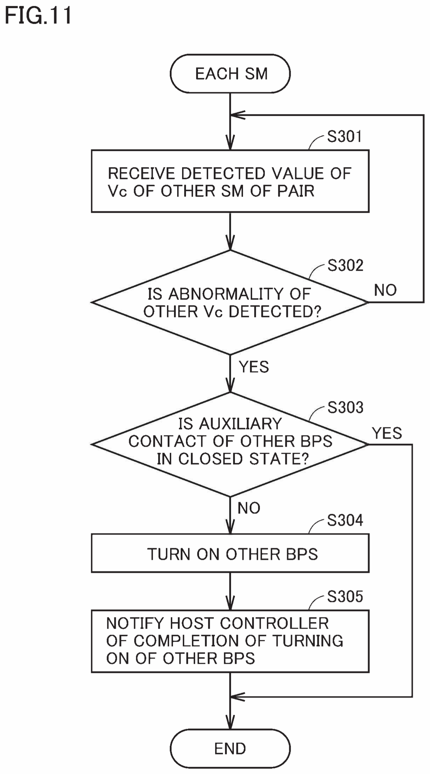

Fig. 11 is a flowchart for illustrating a protective operation for the other submodule of the pair. Individual control unit 27 of each submodule SM performs the operation shown in the flowchart of Fig. 7, and also performs an operation shown in the flowchart of Fig. 11.

Specifically, each submodule SM obtains a detected value of capacitor voltage Vc from voltage detector 25 of the other submodule SM of the pair (S301). Then, each submodule SM determines, based on the obtained other capacitor voltage Vc, whether or not the other submodule SM is abnormal (S302). For example, when the detected value of the other capacitor voltage Vc exceeds an upper limit or a lower limit of a threshold range, and when a turn-on wait signal for bypass switch BPS or a startup-stop signal has not been received from host controller 3, it is determined that the other submodule SM is abnormal (YES in S302).

When it is determined that the other submodule SM is abnormal (YES in S302), each submodule SM checks whether or not auxiliary contact AX of the other bypass switch BPS is in the closed state (S303). As a result, when the other auxiliary contact AX is not in the closed state (NO in S303), each submodule SM turns on bypass switch BPS of the other submodule SM (S304). Further, when it is confirmed that turning on of the other bypass switch BPS has been completed, each submodule SM notifies host controller 3 as such (S305).

As described above, in the power conversion device according to the fourth embodiment, each of two adjacent submodules SM monitors capacitor voltage Vc of the other submodule SM, and can turn on the other bypass switch BPS in a backup manner when the other submodule SM is abnormal. This can ensure reliability of turning on of bypass switch BPS, which can lead to improved operation continuity and operation rate of power converter 2.

### Fifth Embodiment.

In a fifth embodiment, each submodule SM evaluates the health of bypass switch BPS during normal operation. Specifically, individual control unit 27 of each submodule SM passes a weak current that is insufficient to turn on bypass switch BPS through contact operating mechanism 42, and monitors a voltage generated therefrom. This will be specifically described with reference to the drawings.

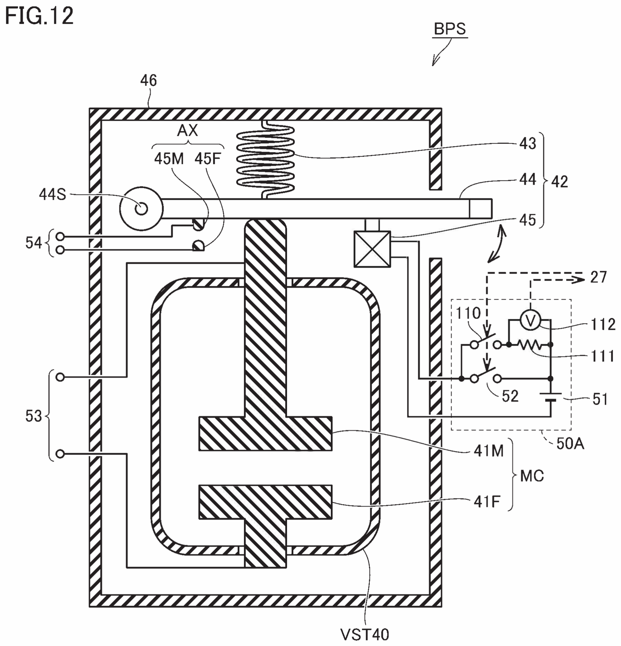

Fig. 12 is a cross-sectional view showing a conceptual configuration of a bypass switch in a power conversion device according to the fifth embodiment. A drive circuit 50A of bypass switch BPS in Fig. 12 differs from drive circuit 50 of bypass switch BPS in Fig. 3 in that the weak current can be passed through latch 45 of contact operating mechanism 42 in addition to a turn-on current that is passed to turn on BPS.

Specifically, drive circuit 50A further includes a switch 110, a resistive element 111, and a voltage detection unit 112, in addition to DC power source 51 and switch 52. Switch 110 and resistive element 111 are connected in series with each other, and are connected in parallel with switch 52. Voltage detection unit 112 detects a current generated in resistive element 111. Opening/closing of switch 52 and switch 110 is controlled by individual control unit 27. A detected value at voltage detection unit 112 is transmitted to individual control unit 27.

According to the configuration of bypass switch BPS described above, during normal operation, individual control unit 27 controls switches 52, 110 to be in the open state. When an abnormality such as capacitor voltage Vc being out of a threshold range is detected, individual control unit 27 controls switch 52 to be in the closed state. Thus, a drive current flows through latch 45, causing latch 45 to be released and bypass switch BPS to be turned on.

On the other hand, when evaluating the health of contact operating mechanism 42 of bypass switch BPS during normal operation, individual control unit 27 controls switch 110 to be in the closed state. Thus, a weak current limited by resistive element 111 flows through latch 45, thereby not causing latch 45 to be released. At this time, a voltage of resistive element 111 detected by voltage detection unit 112 is transmitted to individual control unit 27. Individual control unit 27 can detect a voltage generated in contact operating mechanism 42 by subtracting the voltage of resistive element 111 from the voltage of DC power source 51. When the voltage generated in contact operating mechanism 42 increases, it can be determined that lines of the electromagnet coil portion of latch 45 are about to break. Alternatively, when the voltage generated in resistive element 111 is zero, it can be determined that lines of the latch 45 portion have broken.

The configuration of Fig. 12 is otherwise similar to that of Fig. 3, and therefore, the same or corresponding parts are designated by the same reference characters and will not be described again. Note that the configuration of drive circuit 50A in Fig. 12 is an example and not a limitation.

Health evaluation can be performed by a similar method for an inflator-type contact operating mechanism as well, instead of spring-type contact operating mechanism 42. In an explosive-type inflator, for example, a weak current that is insufficient to ignite a gas generation agent is supplied from drive circuit 50A.

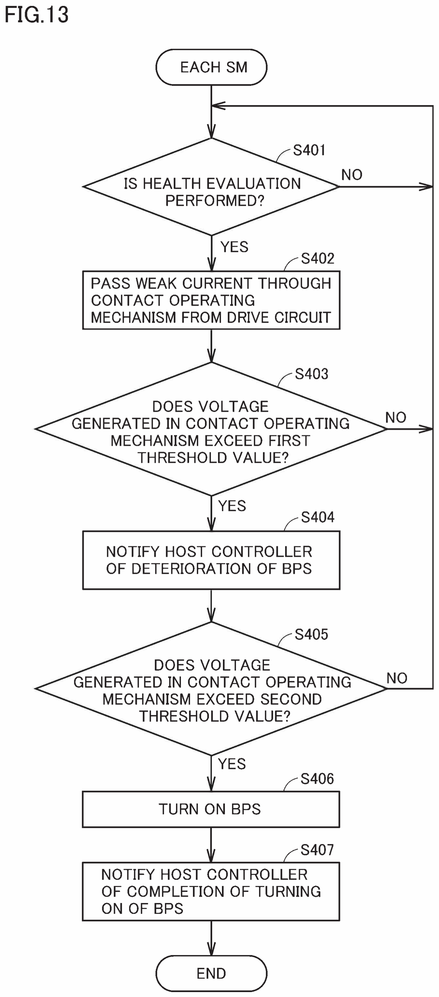

Fig. 13 is a flowchart showing an example of a procedure for evaluating the health of bypass switch BPS. The health evaluation is performed at regular intervals during the operation of the power conversion device (YES in S401).

First, individual control unit 27 of each submodule SM causes drive circuit 50A to pass a weak current that is insufficient to turn on bypass switch BPS through contact operating mechanism 42 (S402). Individual control unit 27 obtains a detected value of a voltage generated in contact operating mechanism 42 in this state.

When the above-described detected voltage exceeds a first threshold value (YES in S403), individual control unit 27 notifies host controller 3 of deterioration of bypass switch BPS (S404).

When the above-described detected voltage exceeds a second threshold value higher than the first threshold value (YES in S405), individual control unit 27 determines that a risk of failure is very high, and outputs a signal for turning on bypass switch BPS (S406). Further, when closing of auxiliary contact AX is confirmed based on a signal from lighting circuit 30, individual control unit 27 notifies host controller 3 of completion of turning on of bypass switch BPS (S407).

As described above, in the power conversion device according to the fifth embodiment, during normal operation, individual control unit 27 of each submodule SM passes a weak current that is insufficient to turn on bypass switch BPS through contact operating mechanism 42 to thereby check the health of contact operating mechanism 42. Thus, when it is determined that the risk of failure is very high, this submodule SM turns on bypass switch BPS before bypass switch BPS fails. This can lead to improved reliability of bypass switch BPS and improved operation continuity of the power converter.

### Sixth Embodiment.

In a sixth embodiment, checking of the health of bypass switch BPS during inspection while the operation of power converter 2 is stopped will be described.

To check the health of bypass switch BPS, an operation test is performed for the inflator type, while a no-voltage turn-on test is performed for the spring type. However, due to testing time, reusability, adverse effects on equipment and the like, only a one-time sampling inspection is conducted for the inflator type, and only a limited number of no-voltage turn-on tests are performed for the spring type as well. This is because a VST experiences significant mechanical shock even during no-voltage turn-on.

For the spring type, therefore, operation of movable contact 41M of main contact MC is limited by a shock-absorbing material during inspection. Thus, operation of the latch 45 portion can be repeatedly confirmed during regular inspection, and bypass switch BPS can be replaced before it actually fails. As a result, a failure rate during the operation of power converter 2 can be reduced, which can lead to improved operation continuity and operation rate of power converter 2.

It should be understood that the embodiments disclosed herein are illustrative and non-restrictive in every respect. The scope of the present application is defined by the terms of the claims, rather than the description above, and is intended to include any modifications within the meaning and scope equivalent to the terms of the claims.

### REFERENCE SIGNS LIST

1 power conversion device; 2 power converter; 3 host controller; 4 leg circuit; 5 upper arm circuit; 6 lower arm circuit; 7, SM submodule (converter cell); 8 reactor; 9 arm current detector; 10 AC voltage detector; 11 DC voltage detector; 12 AC system; 13 transformer; 14 DC system; 16 AC current detector; 17 DC current detector; 18 relay device; 19 command generation unit; 20 conversion circuit; 22 switching element; 23 diode; 24 power storage element; 24N low-potential-side node; 24P high-potential-side node; 25 voltage detector; 26N, 26P pair of input/output terminals; 27 individual control unit; 28 various commands; 29 signal; 30 lighting circuit; 31, 51, 98 DC power source; 32, 91, 92, 111 resistive element; 33 light-emitting element; 41F, 45F fixed contact; 41M, 45M movable contact; 42 contact operating mechanism; 43 spring; 44 manual lever; 45 latch; 46, 47 housing; 48 hole; 50, 50A drive circuit; 52, 97, 110 switch; 53 main contact terminal pair; 54 auxiliary contact terminal pair; 60 input converter; 61 sample hold circuit; 62 multiplexer; 63 A/D converter; 64 CPU; 65 RAM; 66 ROM; 67A, 67B input/output interface; 68 auxiliary storage device; 69 bus; 70 monitoring camera; 72 converter valve tower; 73 converter module; 74 bottom plate; 75 shield plate; 76 support column; 77 insulator; 78 display window; 79 light guiding fiber; 85 lever; 90 abnormality detection unit; 93 voltage divider node; 94 Zener diode; 95 relay; 96 electromagnetic coil; 112 voltage detection unit; AX auxiliary contact; BPS bypass switch; Iac AC current; Iarm arm current; Idc DC current; MC main contact; Nn low-potential-side DC terminal; Np high-potential-side DC terminal; Nu, Nv, Nw AC input terminal; Vac AC voltage; Vc capacitor voltage; Vdc DC voltage.

## Claims

1. A power conversion device comprising a plurality of cascaded submodules, each of the plurality of submodules including:
a pair of input/output terminals;
a plurality of semiconductor switching elements;
a power storage element connected to the pair of input/output terminals through the plurality of semiconductor switching elements;
a mechanical bypass switch for short-circuiting the pair of input/output terminals;
an individual control unit that controls opening/closing of the plurality of semiconductor switching elements and of the bypass switch; and
a notification unit that provides a visual notification indicating operation of the bypass switch,
the power conversion device further comprising:
a monitoring camera that collectively captures images of the respective notification units of the plurality of submodules as one piece of image data; and
a host controller that performs image processing on the image data, to thereby determine an operation state of the bypass switch of each of the plurality of submodules.

2. The power conversion device according to claim 1, wherein
the notification unit has a plurality of features visually distinguishable from each other, the plurality of features including a first feature and a second feature,
a visual change in the first feature is associated with operation of the bypass switch,
a visual change in the second feature is associated with a failed state of a corresponding one of the submodules, and
the host controller identifies changes in the plurality of features of the notification unit based on the image data captured by the monitoring camera.

3. The power conversion device according to claim 1 or 2, wherein
the bypass switch includes:
a main contact provided to short-circuit the pair of input/output terminals, the main contact including a movable contact and a fixed contact; and
an auxiliary contact that closes or opens in conjunction with closing of the main contact,
the notification unit includes a light-emitting element, and
the light-emitting element starts emitting light or stops emitting light by conduction or disconnection of a lighting circuit when the auxiliary contact closes, or starts emitting light or stops emitting light by conduction or disconnection of the lighting circuit when the auxiliary contact opens.

4. The power conversion device according to claim 1 or 2, wherein
the bypass switch includes a main contact provided to short-circuit the pair of input/output terminals, the main contact including a movable contact and a fixed contact, and
the notification unit is changed in position in conjunction with the movable contact, and a changed position of the notification unit enables confirmation of operation of the bypass switch.

5. The power conversion device according to claim 3 or 4, wherein
the bypass switch further includes:
a contact operating mechanism that operates the movable contact of the main contact by a drive current; and
a drive circuit that generates the drive current in accordance with a command from the individual control unit,
when evaluating health of the bypass switch, the drive circuit supplies a weak current to the contact operating mechanism, the weak current being insufficient to operate the movable contact of the main contact, and
when a voltage generated in the contact operating mechanism by the weak current exceeds a threshold value, the individual control unit operates the bypass switch.

6. The power conversion device according to any one of claims 3 to 5, wherein
the bypass switch includes a contact operating mechanism that operates the movable contact of the main contact when force is released from a spring, and
the bypass switch is configured to limit the operation of the movable contact of the main contact by a shock-absorbing material during inspection.

7. The power conversion device according to any one of claims 1 to 6, wherein
each of the plurality of submodules further includes an abnormality detection unit that operates the bypass switch independently of the individual control unit based on a detected value of a voltage of the power storage element.

8. The power conversion device according to any one of claims 1 to 6, wherein
every two adjacent ones of the plurality of submodules constitute a pair, and
the individual control unit of each submodule constituting the pair is configured to operate its own bypass switch based on a detected value of a voltage of its own power storage element, and to operate the other bypass switch based on a detected value of a voltage of the other power storage element.
